(19) Europäisches Patentamt
European Patent Office
Office européen des brevets

(11) **EP 4 403 369 A1**

(12) **EUROPEAN PATENT APPLICATION**
published in accordance with Art. 153(4) EPC

(43) Date of publication:
**24.07.2024 Bulletin 2024/30**

(21) Application number: **22910913.7**

(22) Date of filing: **08.12.2022**

(51) International Patent Classification (IPC):
**B41M 1/30** (2006.01)     **C09D 11/30** (2014.01)
**C09D 11/40** (2014.01)     **B41M 5/00** (2006.01)
**B41J 2/01** (2006.01)

(52) Cooperative Patent Classification (CPC):
**B41J 2/01; B41M 1/30; B41M 5/00; C09D 11/30; C09D 11/40**

(86) International application number:
**PCT/JP2022/045218**

(87) International publication number:
**WO 2023/120202 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2021 JP 2021206932**

(71) Applicant: DIC Corporation
**Tokyo 174-8520 (JP)**

(72) Inventors:
• **GOUDA, Keigo**
**Kitaadachi-gun, Saitama 362-8577 (JP)**
• **NABE, Takaaki**
**Kitaadachi-gun, Saitama 362-8577 (JP)**
• **CHEAWCHAN, Sumitra**
**Kitaadachi-gun, Saitama 362-8577 (JP)**
• **ICHIKAWA, Ryouta**
**Kitaadachi-gun, Saitama 362-8577 (JP)**

(74) Representative: **Kraus & Lederer PartGmbB**
**Thomas-Wimmer-Ring 15**
**80539 München (DE)**

(54) **AQUEOUS INK COMPOSITION, INK SET, PRINTED MATTER, AND PRODUCTION METHOD FOR PRINTED MATTER**

(57)     One object of the present invention is to provide an aqueous ink composition with a high degree of freedom in adjustment to an optimum hue and with a high optical density, without causing color unevenness or muddiness in printed matter, and with favorable ejectability. An aspect of the present invention relates to an aqueous ink composition for use in an inkjet recording method comprising: an aqueous pigment dispersion having a hue angle $h^1$ in L*C*h color space determined using a spectrophotometer; and an aqueous dye composition having a hue angle $h^2$ in L*C*h color space determined using a spectrophotometer, wherein the hue angle $h^2$ of the aqueous dye composition satisfies predetermined conditions.

**EP 4 403 369 A1**

**Description**

Technical Field

The present invention relates to an aqueous ink composition, an ink set, printed matter, and a production method for printed matter.

Background Art

Inkjet recording is a recording method in which ink droplets are ejected from extremely fine nozzles directly onto a recording material and attached thereto to form characters and images. This method is advantageous in that devices used produce less noise and are easy to handle. Moreover, with this method, color printing is easy. The inkjet recording method is therefore used not only in output machines in offices and homes but also in industrial applications.

Inks for the inkjet recording method (inkjet inks) include solvent inks, UV inks, and aqueous inks. Among these, the demand for aqueous inks is increasing in the background of environmental awareness (see, for example, PTL 1).

Citation List

Patent Literature

PTL 1: Japanese Unexamined Patent Application Publication No. 2011-12226

Summary of Invention

Technical Problem

In recent years, the inkjet recording method has been expected to be used in a wider range of applications, and there has been a growing need for printing with aqueous inkjet inks not only on ink-absorbent recording media such as plain paper but also on less-ink-absorbent recording media or non-ink-absorbent recording media such as coated cardboard lined with coated paper.

However, when a less-ink-absorbent or non-ink-absorbent recording medium is printed with an aqueous inkjet ink, the ink is repelled on the recording medium, causing the dots to combine, resulting in granular unevenness (granularity) of the ink coating. The inventors of the present invention have conducted elaborate studies and found that the granularity can be reduced by using a pigment and a dye in combination, but in this case, it is difficult to obtain sufficient image fastness in printing on an ink-absorbent recording medium such as plain paper, and the ink coating sometimes peels off from the recording medium under the influence of friction, moisture, and the like.

An object of the present invention is to provide an aqueous inkjet ink with which the granularity of an ink coating caused in printing on a less-ink-absorbent or non-ink-absorbent recording medium is reduced while sufficient image fastness is achieved even in printing on an ink-absorbent recording medium.

With the expanded range of applications of printed matter obtained by the inkjet recording method, the printed matter is required to be able to reproduce images appearing on displays and the like at a high level. In the reproduction, inks that can reproduce preference colors favored in certain applications, countries, and the like and different from hues commonly called basic colors are sometimes required.

Inks that can reproduce characteristic hues as described above can be obtained, for example, by selecting pigments and dyes as appropriate and using them in combination.

However, for example, when a magenta ink with a characteristic hue is to be obtained, the selected pigment and the like are inevitably a combination of a pigment and the like with similar hues in order to prevent the basic color tone of magenta from being lost.

Although an ink with an optimum hue may be prepared with some combinations of pigments and dyes, the ink may fail to be ejected by the inkjet recording method or may cause color unevenness or muddiness in printed matter.

In view of the above, one object of the present invention is to provide an aqueous ink composition with a high degree of freedom in adjustment to an optimum hue and with a high optical density, without causing color unevenness or muddiness in printed matter, and with favorable ejectability.

Solution to Problem

An aspect of the present invention provides an aqueous ink composition for use in an inkjet recording method.

The aqueous ink composition contains an aqueous pigment dispersion having a hue angle $h^1$ in L*C*h color space determined using a spectrophotometer, in which a hue angle $h^2$ in L*C*h color space determined using a spectrophotometer satisfies the following conditions.

When the hue angle $h^1$ is 0° or greater and smaller than 45°, the hue angle $h^2$ is in a range of $(h^2+45)°$ or greater and $(360-45+h^1)°$ or smaller.

When the hue angle $h^1$ is 45° or greater and smaller than 315°, the hue angle $h^2$ is in a range of 0° or greater and $(h^1-45)°$ or smaller or in a range of $(h^1+45)°$ or greater and 360° or smaller.

When the hue angle $h^1$ is 315° or greater and smaller than 360°, the hue angle $h^2$ is in a range of $(h^1+45-360)°$ or greater and $(h^1-45)°$ or smaller.

Advantageous Effects of Invention

The present invention can provide an aqueous inkjet ink with which the granularity of an ink coating caused in printing on a less-ink-absorbent or non-ink-absorbent recording medium is reduced while sufficient image fastness and optical density are achieved even in printing on an ink-absorbent recording medium.

Furthermore, the present invention can provide an aqueous inkjet ink with a high degree of freedom in adjustment to an optimum hue, without causing color unevenness or muddiness in printed matter, and with favorable ejectability.

Description of Embodiments

Preferred embodiments of the present invention will be described below. However, the present invention is not intended to be limited by the following embodiments. In the present description, a numerical range indicated with "to" indicates a range that includes the numerical values listed before and after "to" as the minimum and maximum values, respectively. Upper limits and lower limits listed individually may be combined as desired. The term "aqueous ink composition" means that the water content in the total solvent in the ink composition is 40% by mass or more and that a water-insoluble solvent having a solubility in water at 20°C of less than 0.5 g/100 mL (in the amount of 1% by mass or less of the total amount of the solvent) is substantially not included.

(Aqueous Ink Composition)

An aqueous ink composition of the present invention is an aqueous ink composition for use in an inkjet recording method. The aqueous ink composition contains an aqueous pigment dispersion having a hue angle $h^1$ in L*C*h color space determined using a spectrophotometer, and an aqueous dye composition having a hue angle $h^2$ in L*C*h color space determined using a spectrophotometer, and the hue angle $h^2$ of the aqueous dye composition satisfies the following conditions.

When the hue angle $h^1$ is 0° or greater and smaller than 45°, the hue angle $h^2$ is in a range of $(h^1+45)°$ or greater and $(360-45+h^1)°$ or smaller.

When the hue angle $h^1$ is 45° or greater and smaller than 315°, the hue angle $h^2$ is in a range of 0° or greater and $(h^1-45)°$ or smaller or in a range of $(h^1+45)°$ or greater and 360° or smaller.

When the hue angle $h^1$ is 315° or greater and smaller than 360°, the hue angle $h^2$ is in a range of $(h^1+45-360)°$ or greater and $(h^1-45)°$ or smaller.

With the aqueous ink composition described above, the granularity of an ink coating caused in printing on a less-ink-absorbent or non-ink-absorbent recording medium is reduced while sufficient image fastness is achieved even in printing on an ink-absorbent recording medium. The aqueous ink composition therefore tends to form an ink coating that is excellent in optical density and image fastness and is even and uniform, regardless of the ink absorbency of recording media.

Furthermore, the present invention can provide an aqueous inkjet ink with a high degree of freedom in adjustment to an optimum hue, without causing color unevenness or muddiness in printed matter, and with favorable ejectability.

As described above, the ink composition in the present embodiment is applicable not only to ink-absorbent recording media but also to less-ink-absorbent or non-ink-absorbent recording media. Examples of the ink-absorbent recording media include recording media such as copy paper (PPC paper) commonly used in copiers and recording media with an ink absorption layer.

As used herein "less-ink-absorbent" means that the amount of water absorbed by a recording medium in a contact time of 100 msec between the recording surface of the recording medium and water is 10 g/m² or less, and "non-ink-absorbent" means that the amount of water absorbed is 0 g/m². The amount of water absorbed is the amount of water transferred in a contact time of 100 msec with pure water as measured at 23°C and 50% relative humidity using an automatic scanning liquid absorptometer (KM500win available from KUMAGAI RIKI KOGYO Co., Ltd.). The measurement conditions are as follows.

[Spiral Method]

Contact Time: 0.010 to 1.0 (sec)
Pitch: 7 (mm)
Lenth per sampling: 86.29 (degrees)
Start Radius: 20 (mm)
End Radius: 60 (mm)
Min Contact Time: 10 (ms)
Max Contact Time: 1000 (ms)
Sampling Pattern: 50
Number of sampling points: 19

[Square Head]

Slit Span: 1 (mm)
Width: 5 (mm)

Examples of the less-ink-absorbent or non-ink-absorbent recording media include cardboard having a surface with a colored layer less absorbing a solvent in ink, art paper such as printing stock, coated paper, lightweight coated paper, slightly coated paper, and plastic films.

The aqueous ink composition of the present invention contains the aqueous pigment dispersion and the aqueous dye composition. The aqueous pigment dispersion having a hue angle $h^1$ in L*C*h color space determined using a spectrophotometer is used. Here, any value can be employed for $h^1$. For example, when a yellow pigment and a red dye are combined to produce a yellow ink, $h^1$ is preferably in the range of 45° to 135°. When a cyan pigment and a yellow dye are combined to produce a cyan ink, $h^1$ is preferably in the range of 135° to 225°. When a magenta pigment and a red dye are combined to produce a magenta ink, $h^1$ is preferably 270° to 360°. An ink that combines a pigment and a dye described above can be used to obtain an aqueous ink composition with a high degree of freedom in adjustment to an optimum hue, without causing color unevenness or muddiness in printed matter, and with favorable ejectability.

As the aqueous pigment dispersion, a dispersion in which a pigment is dispersed in an aqueous medium with a pigment dispersant can be used. As the aqueous pigment dispersion, a dispersion in which a self-dispersing pigment is dispersed in an aqueous medium can be used.

As the aqueous dye composition used in the aqueous ink composition of the present invention, an aqueous dye composition having a hue angle $h^2$ in L*C*h color space determined using a spectrophotometer is used. Here, the optimum hue angle $h^2$ of the aqueous dye composition is selected and used according to the hue angle $h^1$ of the aqueous pigment dispersion used in combination with the aqueous dye composition. The combination of the hue angles $h^1$ and $h^2$ is as follows.

When the hue angle $h^1$ is 0° or greater and smaller than 45°, the hue angle $h^2$ is in a range of $(h^1+45)°$ or greater and $(360-45+h^1)°$ or smaller.

When the hue angle $h^1$ is 45° or greater and smaller than 315°, the hue angle $h^2$ is in a range of 0° or greater and $(h^1-45)°$ or smaller or in a range of $(h^1+45)°$ or greater and 360° or smaller.

When the hue angle $h^1$ is 315° or greater and smaller than 360°, the hue angle $h^2$ is in a range of $(h^1+45-360)°$ or greater and $(h^1-45)°$ or smaller.

The combination of the aqueous pigment dispersion having a hue angle $h^1$ and the aqueous dye composition having a hue angle $h^2$ in the above range can produce an aqueous ink composition with favorable ejectability without deteriorating image fastness and the like and without causing color unevenness or muddiness in printed matter.

Here, for example, when a yellow ink is produced by combining an aqueous yellow pigment dispersion having a hue angle $h^1$ in the range of 45° to 135° and a red dye, $h^2$ is preferably in the range of 0° or greater and $(h^1-45)°$ or smaller or in the range of $(h^1+45)°$ or greater and 360° or smaller in order to obtain an aqueous ink composition with favorable ejectability without causing color unevenness or muddiness in printed matter. To give an example, when an aqueous yellow pigment dispersion having a hue angle $h^1$ of 90° is used, it is preferable to use a red dye composition having a hue angle $h^2$ of 0° or greater and 45° or smaller, or a red dye composition having a hue angle $h^2$ of 135° or greater and 360° or smaller.

The aqueous dye composition in which a dye is dissolved or dispersed in an aqueous medium can be used.

The hue angle $h^1$ of the aqueous pigment dispersion and the hue angle $h^2$ of the aqueous dye composition refer to values calculated based on the following formula using the values of L*a*b* calculated based on the absorbance obtained by using a spectrophotometer (light source C) from samples of the aqueous pigment dispersion and the aqueous dye composition diluted with distilled water.

$$\text{Hue angle h} = \tan^{-1}(b^*/a^*)$$

The aqueous pigment dispersion, for example, diluted 10000 times and adjusted to a pigment concentration of 0.002% by mass and the aqueous dye composition, for example, diluted 50000 times and adjusted to a dye concentration of 0.002% by mass were used as the samples.

The components contained in the aqueous ink composition will be described in detail below, taking an aqueous ink composition containing a pigment, a dye, an acid-modified polypropylene resin, and an oxidized polyethylene wax as an example.

For example, a black pigment, a cyan pigment, a magenta pigment, a yellow pigment, or the like can be used as the pigment. Organic pigments and inorganic pigments commonly used in aqueous gravure inks or aqueous inkjet inks can be used as these pigments.

The hue angle $h^1$ of the aqueous pigment dispersion containing a cyan pigment is 210° to 230°. The hue angle $h^1$ of the aqueous pigment dispersion containing a magenta pigment is 330° to 350°. The hue angle $h^1$ of the aqueous pigment dispersion containing a yellow pigment is 80° to 100°.

The pigment may include one or both of an organic pigment and an inorganic pigment. Either an acid-untreated pigment or an acid-treated pigment can be used as the pigment.

Examples of the inorganic pigment that can be used include iron oxide and carbon black produced by a method such as a contact method, a furnace method, or a thermal method.

Examples of the organic pigment that can be used include azo pigments (azo lakes, insoluble azo pigments, condensed azo pigments, chelate azo pigments, etc.), polycyclic pigments (e.g., phthalocyanine pigments, perylene pigments, perinone pigments, anthraquinone pigments, quinacridone pigments, dioxazine pigments, thioindigo pigments, isoindolinone pigments, quinophthalone pigments, etc.), lake pigments (e.g., basic dye-type chelates, acid dye-type chelates, etc.), nitro pigments, nitroso pigments, and aniline black.

Examples of the pigment that can be used in black ink (black pigment) include C.I. Pigment Black 1, 6, 7, 8, 10, 26, 27, and 28. Among these, C.I. Pigment Black 7 is preferably used. Specific examples of the black pigment include No. 2300, No. 2200B, No. 900, No. 960, No. 980, No. 33, No. 40, No. 45, No. 45L, No. 52, HCF88, MA7, MA8, MA100, and the like from Mitsubishi Chemical Corporation; Raven 5750, Raven 5250, Raven 5000, Raven 3500, Raven 1255, Raven 700, and the like from Columbian Chemicals Company; Regal 400R, Regal 330R, Regal 660R, Mogul L, Mogul 700, Monarch 800, Monarch 880 Monarch 900, Monarch 1000, Monarch 1100, Monarch 1300, Monarch 1400, and the like from Cabot Corporation; and Color Black FW1, Color Black FW2, Color Black FW2V, Color Black FW18, Color Black FW200, Color Black S150, Color Black S160, Color Black S170, Printex 35, Printex U, Printex V, Printex 1400U, Special Black 6, Special Black 5, Special Black 4, Special Black 4A, NIPEX 150, NIPEX 160, NIPEX 170, NIPEX 180, and the like from Degussa AG.

Specific examples of the pigment that can be used in cyan ink (cyan pigment) include C.I. Pigment Blue 1, 2, 3, 15, 15: 3, 15: 4, 15: 6, 16, 22, 60, 63, and 66. Among these, C.I. Pigment Blue 15:3 is preferably used.

Examples of the pigment that can be used in magenta ink (magenta pigment) include C.I. Pigment Red 5, 7, 12, 48 (Ca), 48 (Mn), 57 (Ca), 57:1, 112, 122, 123, 146, 176, 184, 185, 202, 209, 269, and 282; and C.I. Pigment Violet 19. Among these, C.I. Pigment Red 122 is preferably used.

Examples of the pigment that can be used in yellow ink (yellow pigment) include C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, and 185. Among these, C.I. Pigment Yellow 74 is preferably used.

Preferably, the pigment undergoes a step for dispersing well in an aqueous medium in order to be stably present in the aqueous ink composition. For example, a dispersibility-imparting group (a hydrophilic functional group and/or a salt thereof) or an active species having a dispersibility-imparting group may be bonded (grafted) directly or indirectly via an alkyl group, an alkyl ether group, an aryl group, or the like to the surface of the pigment. Such a self-dispersing pigment can be produced, for example, by vacuum plasma treatment, oxidation treatment with a hypohalous acid and/or a hypohalite, ozone oxidation treatment, or a wet oxidation process in which the pigment surface is oxidized by an oxidant in water, or by bonding a carboxy group via a phenyl group by bonding p-aminobenzoic acid to the pigment surface.

When a self-dispersing pigment is used, the inclusion of a pigment dispersant is unnecessary, and, therefore, foaming and the like resulting from a pigment dispersant can be suppressed and an aqueous ink composition with high ejection stability is easily obtained. Furthermore, when a self-dispersing pigment is used, significant increase in viscosity resulting from a pigment dispersant can be suppressed, and, therefore, a larger amount of pigment can be contained, and printed matter with high printing density is easily produced. A commercially available product can be used as the self-dispersing pigment. Examples of the commercially available product include Micro Jet CW-1 (product name; available from ORIENT CHEMICAL INDUSTRIES CO., LTD.), and CAB-O-JET 200 and CAB-O-JET 300 (product names; available from Cabot Corporation).

A pigment having a surface on which a pigment dispersant described later is adsorbed or a pigment having a surface coated with a pigment dispersant may be used as the pigment.

The amount of the pigment is, for example, 1% by mass or more and may be 2% by mass or more of the total amount of the aqueous ink composition, in terms of ensuring a sufficient printing density. The amount of the pigment is, for example, 15% by mass or less and may be 10% by mass or less of the total amount of the aqueous ink composition, in terms of easily suppressing the occurrence of streaks and in terms of easily achieving more excellent image fastness while keeping high dispersion stability of the pigment.

As a dye used in combination with the pigment, for example, a blue dye is at least one selected from the group consisting of Acid Blue 90, Acid Blue 104, Acid Blue 317, Direct Blue 301, Acid Blue 83, Acid Blue 103, Acid Blue 113, and Acid Blue 123 and preferably includes at least one selected from the group consisting of Acid Blue 317, Direct Blue 301, Acid Blue 113, and Acid Blue 123 in terms of water resistance. These dyes may be used in combination as the blue dye. The blue dye may include a dye other than these dyes but preferably mainly includes these dyes. The amount of these dyes is, for example, 60% by mass or more and may be 70% by mass or more of the total amount of the blue dye.

A red dye is at least one selected from the group consisting of Acid Violet 48, Acid Red 80, Acid Red 97, Acid Red 151, Acid Red 249, Acid Red 289, and Acid Red 94, and preferably includes at least one selected from the group consisting of Acid Violet 48, Acid Red 289, and Acid Red 94 in terms of water resistance. These dyes may be used in combination as the red dye. The red dye may include a dye other than these dyes but preferably mainly includes these dyes. The amount of these dyes is, for example, 60% by mass or more and may be 70% by mass or more of the total amount of the red dye.

A yellow dye is at least one selected from the group consisting of Acid Yellow 23, Acid Yellow 17, and Acid Yellow 40, and these dyes may be used in combination as the yellow dye. The yellow dye may include a dye other than these dyes but preferably mainly includes these dyes. The amount of these dyes is, for example, 60% by mass or more and may be 70% by mass or more of the total amount of the yellow dye.

The amount of the dye is preferably 0.01% by mass or more of the total amount of the aqueous ink composition, in terms of ensuring a sufficient printing density and in terms of further reducing the granularity. The amount of the dye is preferably 3.0% by mass or less and more preferably 1.5% by mass or less of the total amount of the aqueous ink composition, in terms of further improving image fastness (particularly image fastness in printing on an ink-absorbent recording medium). In these respects, the amount of the dye is preferably 0.01 to 3.0% by mass and more preferably 0.01 to 1.5% by mass of the total amount of the aqueous ink composition.

As a specific combination of the pigment and the dye, for example, when a yellow ink is to be produced, it is preferable to use an aqueous pigment dispersion containing C.I. Pigment Yellow 74 with a hue angle $h^1$ of 98° and an aqueous dye composition containing Acid Red 151 with a hue angle $h^2$ of 9° in combination in order to produce printed matter with a high-impact preference color in secondary color red, with a high degree of freedom in adjustment to an optimum hue.

The total amount of the pigment and the dye is, for example, 1% by mass or more and may be 2% by mass or more of the total amount of the aqueous ink composition, in terms of ensuring a sufficient printing density. The total amount of the pigment and the dye is, for example, 17% by mass or less and may be 15% by mass or less or 10% by mass or less of the total amount of the aqueous ink composition, in terms of easily suppressing the occurrence of streaks and in terms of easily achieving more excellent image fastness while keeping high dispersion stability of the pigment. In these respects, the total amount of the pigment and the dye may be 1 to 17% by mass of the total amount of the aqueous ink composition.

The pigment and the dye are used preferably in a range in which the mass ratio of the dye to the mass of the pigment [(mass of dye/mass of pigment) × 100] is 1.0 to 40.0% by mass, more preferably in the range of 1.0 to 20% by mass, and particularly preferably in the range of 1.0 to 10.0% by mass in order to obtain excellent printing quality.

[Aqueous Medium]

The aqueous medium is, for example, water. Specifically, pure water or ultrapure water, such as ion-exchange water, ultra-filtrated water, reverse osmosis water, and distilled water can be used. The amount of the aqueous medium is, for example, 30 to 90% by mass or 40 to 80% by mass of the total amount of the aqueous ink composition, in terms of achieving more excellent setting properties and in terms of easily achieving high ejection stability. The amount of the aqueous medium may be 30% by mass or more or 40% by mass or more, and may be 90% by mass or less or 80% by mass or less of the total amount of the aqueous ink composition.

The aqueous ink composition may contain a solvent component other than water (e.g., a water-soluble organic solvent), for example, for adjustment of viscosity. However, when a mixed solvent of water and a solvent component other than water (e.g., a water-soluble organic solvent) is used, the amount of water in the total solvent is 40% by mass or more and may be 50% by mass or more. The water-soluble organic solvent may be a known water-soluble organic solvent used for inkjet inks.

The aqueous ink composition of the present invention may further contain a binder resin and/or a wax, in addition to the aqueous medium, the pigment, and the dye. In the aqueous ink composition, the pigment, the dye, the binder resin, and the wax are preferably present in a dispersed or dissolved state in the aqueous medium that is a solvent.

The kind of the binder resin and the kind of the wax are not limited, but preferably, the binder resin contains an acid-modified polypropylene resin and the wax contains an oxidized polyethylene wax. When the aqueous ink composition contains an acid-modified polypropylene resin and an oxidized polyethylene wax, the ink fixability (setting properties) and image fastness to a recording medium immediately after printing tend to be improved in printing on a less-ink-absorbent or non-ink-absorbent recording medium. In printing with the aqueous inkjet ink on a less-ink-absorbent or non-ink-absorbent recording medium, it is preferable to suppress the occurrence of density unevenness of an ink coating, called "mottling", and to suppress occurrence of streaky print defects, called "white streaks", in addition to achieving high setting properties and image fastness described above. When the aqueous ink composition contains an acid-modified polypropylene resin and an oxidized polyethylene wax, the occurrence of mottling and white streaks can be suppressed by adjusting the amount of the acid-modified polypropylene resin.

[Acid-Modified Polypropylene Resin]

The acid-modified polypropylene resin is a resin obtained by modifying polypropylene with one or two or more acid compounds and has a polypropylene-derived backbone (polypropylene backbone) and an acid compound-derived functional group. The polypropylene backbone has a structural unit mainly derived from propylene.

The polypropylene backbone may be a homopolypropylene (a homopolymer of propylene) backbone, may be a block polypropylene (a block copolymer of propylene and another olefin (e.g., ethylene)) backbone, or may be a random polypropylene (a random copolymer of propylene and another olefin (e.g., ethylene)) backbone. Examples of the other olefin include alkenes such as ethylene, isobutylene, 1-butene, 1-pentene, and 1-hexene. These components may be linear or branched. The carbon number of the other olefin component is, for example, 2 to 6.

The amount of the propylene component (the amount of the structural unit derived from propylene) in the polypropylene backbone is, for example, 60 mol% or more, and may be 70 mol% or more. When the polypropylene backbone is a block polypropylene backbone or a random polypropylene backbone, the amount of the propylene component (the amount of the structural unit derived from propylene) in the polypropylene backbone is, for example, 95 mol% or less, and may be 90 mol% or less.

The amount of the polypropylene backbone in the acid-modified polypropylene resin is, for example, 50 to 99% by mass of the total amount of the acid-modified polypropylene resin. The amount of the polypropylene backbone in the acid-modified polypropylene resin may be 50% by mass or more, 60% by mass or more, or 70% by mass or more, and may be 99% by mass or less, 95% by mass or less, or 90% by mass or less of the total amount of the acid-modified polypropylene resin.

The acid compound is, for example, a compound having an acid group such as a carboxy group and an acid anhydride group, or a derivative thereof. The derivative refers to a compound obtained by modifying (e.g., esterifying, amidating, or imidating) the acid group of the compound having an acid group. The number of acid groups in the acid compound may be one or more (e.g., two). Examples of the acid compound include unsaturated carboxylic acids, unsaturated carboxylic anhydrides, and derivatives thereof. Specifically, examples include (meth)acrylic acid, maleic acid, maleic anhydride, fumaric acid, citraconic acid, citraconic anhydride, mesaconic acid, itaconic acid, itaconic anhydride, aconitic acid, aconitic anhydride, and hymic anhydride, and derivatives of these compounds. Examples of the derivatives include compounds having at least one (meth)acryloyl group in the molecule of methyl (meth)acrylate, ethyl (meth)acrylate, and the like. The term (meth)acrylic means acrylic or methacrylic. This is applicable to (meth)acrylate and (meth)acryloyl. The acid compound is preferably a compound having an acid group.

The degree of acid modification (e.g., graft weight) in the acid-modified polypropylene resin is, for example, 1 to 20% by mass. The degree of acid modification in the acid-modified polypropylene resin may be 1% by mass or more or 3% by mass or more, and may be 20% by mass or less or 10% by mass or less. The degree of acid modification and the graft weight can be determined by alkalimetry or Fourier transform infrared spectroscopy.

An example of the method of acid modification is graft modification of polypropylene. Specific examples include a method in which polypropylene is heated and melted to the melting point or higher to react in the presence of a radical reaction initiator (melting method), and a method in which polypropylene is dissolved in an organic solvent and then heated and stirred in the presence of a radical reaction initiator to react (solution method). Examples of the radial reaction initiator include organic peroxide compounds and azonitriles.

The acid-modified polypropylene resin may be chlorinated. A chlorination reaction can be performed by conventionally known methods.

The weight average molecular weight of the acid-modified polypropylene resin is, for example, 10,000 to 200,000. The weight average molecular weight of the acid-modified polypropylene resin may be 10,000 or more, 15,000 or more, or 40,000 or more, and may be 200,000 or less, 150,000 or less, or 120,000 or less. The weight average molecular weight is the value measured by gel permeation chromatography (standard material: polystyrene).

The melting point ($Tm_1$) of the acid-modified polypropylene resin is, for example, 50 to 150°C. When the melting point ($Tm_1$) of the acid-modified polypropylene resin is in this range, more excellent setting properties and image fastness tend to be achieved. The melting point ($Tm_1$) of the acid-modified polypropylene resin is preferably lower than the melting point of the oxidized polyethylene wax. The melting point ($Tm_1$) is the value measured by a melting point measuring device in compliance with JIS K 0064.

The acid-modified polypropylene resin is, for example, in the particulate form. The average particle size of the particulate acid-modified polypropylene resin is, for example, 10 to 200 nm in terms of preventing clogging of inkjet heads. The average particle size of the particulate acid-modified polypropylene resin may be 10 nm or more or 20 nm or more, and may be 200 nm or less or 170 nm or less. The average particle size is the d50 diameter in the volume-based particle size distribution as measured by a laser scattering method using a laser scattering particle size analyzer (e.g., Microtrac).

The acid-modified polypropylene resin is preferably used in a dissolved or dispersed state in a solvent and more preferably used in a state of emulsion dispersed in a solvent. The solvent is preferably an aqueous medium and more preferably the same aqueous medium as the aqueous medium used in the solvent of the aqueous ink composition. When such a dispersion is used, the pH of the dispersion is, for example, 6 to 10 at a liquid temperature of 25°C in terms of facilitating dispersion of the acid-modified polypropylene resin in the solvent and improving storage stability. To keep the pH in this range, the dispersion may contain an amine neutralizer such as ammonia water, triethylamine, triethanolamine, dimethylaminoethanol, or morpholine, or an inorganic base such as sodium hydroxide or potassium hydroxide.

The acid-modified polypropylene resin can be used singly or in combination of two or more.

A commercially available product can be used as the acid-modified polypropylene resin. Examples of preferred commercially available products include AUROREN (registered trademark) AE-301 and AE-502 from Nippon Paper Industries Co., Ltd.

The amount of the acid-modified polypropylene resin is preferably 3% by mass or less and may be 2.5% by mass or less or 2% by mass or less of the total amount of the aqueous ink composition, in terms of suppressing the occurrence of mottling and white streaks in printing on a less-ink-absorbent or non-ink-absorbent recording medium. The amount of the acid-modified polypropylene resin is preferably 0.5% by mass or more and may be 0.75% by mass or more or 1% by mass or more of the total amount of the aqueous ink composition, in terms of achieving more excellent setting properties. In these respects, the amount of the acid-modified polypropylene resin is preferably 0.5 to 3% by mass of the total amount of the aqueous ink composition.

The amount of the acid-modified polypropylene resin is preferably 300 parts by mass or less and may be 150 parts by mass or less or 100 parts by mass or less per 100 parts by mass of the total of the pigment and the dye, in terms of suppressing the occurrence of mottling and white streaks in printing on a less-ink-absorbent or non-ink-absorbent recording medium. The amount of the acid-modified polypropylene resin is preferably 8 parts by mass or more and may be 12 parts by mass or more or 16 parts by mass or more per 100 parts by mass of the total of the pigment and the dye, in terms of achieving more excellent setting properties. In these respects, the amount of the acid-modified polypropylene resin is preferably 8 to 300 parts by mass per 100 parts by mass of the total of the pigment and the dye.

Although the aqueous ink composition may contain a resin other than the acid-modified polypropylene resin as the binder resin, the amount of the acid-modified polypropylene resin per 100 parts by mass of the total binder resin is preferably 80 parts by mass or more and may be 90 parts by mass or more, 95 parts by mass or more, or 100 parts by mass.

[Oxidized Polyethylene Wax]

The oxidized polyethylene wax is made by oxidation of polyethylene wax and has a polyethylene-derived backbone (polyethylene backbone). The polyethylene backbone has a structural unit mainly derived from ethylene.

The polyethylene backbone may be a homopolyethylene (a homopolymer of ethylene) backbone, may be a block polyethylene (a block copolymer of ethylene and another olefin) backbone, or may be a random polyethylene (a random copolymer of ethylene and another olefin) backbone. Examples of the other olefin include alkenes such as propylene, isobutylene, 1-butene, 1-pentene, and 1-hexene. These components may be linear or branched. The carbon number of the other olefin component is, for example, 2 to 6.

The amount of the ethylene component (the amount of the structural unit derived from ethylene) in the polyethylene backbone is, for example, 60 mol% or more, and may be 70 mol% or more. When the polyethylene backbone is a block polyethylene backbone or a random polyethylene backbone, the amount of the ethylene component (the amount of the structural unit derived from ethylene) in the polyethylene backbone is, for example, 95 mol% or less, and may be 90 mol% or less.

The amount of the polyethylene backbone in the oxidized polyethylene wax is, for example, 50 to 99% by mass of the total amount of the oxidized polyethylene wax. The amount of the polyethylene backbone in the oxidized polyethylene wax may be 50% by mass or more, 60% by mass or more, or 70% by mass or more, and may be 99% by mass or less, 95% by mass or less, or 90% by mass or less of the total amount of the oxidized polyethylene wax.

The oxidized polyethylene wax preferably includes high-density oxidized polyethylene wax in terms of achieving more excellent image fastness. In the present embodiment, by the synergistic effect of using the acid-modified polypropylene resin and the high-density oxidized polyethylene wax in combination, more excellent setting properties and image fastness and more excellent mottling-suppressing effect tend to be achieved. The density of the high-density oxidized polyethylene wax is, for example, 0.95 g/cm$^3$ or higher and may be 0.95 to 1.1 g/cm$^3$.

The melting point (Tm$_2$) of the oxidized polyethylene wax is, for example, 160°C or lower, preferably 140°C or lower, and may be 135°C or lower or 130°C or lower. The melting point (Tm$_2$) of the oxidized polyethylene wax is, for example, 40°C or higher, preferably 120°C or higher, and more preferably 125°C or higher. The melting point (Tm$_2$) is the value measured by a melting point measuring device in compliance with JIS K 0064.

The oxidized polyethylene wax is, for example, in the particulate form. The average particle size of the particulate oxidized polyethylene wax is, for example, 10 to 200 nm in terms of preventing clogging of inkjet heads. The average particle size of the particulate oxidized polyethylene wax may be 20 nm or more or 30 nm or more, and may be 100 nm or less or 60 nm or less. The average particle size is the d50 diameter in the volume-based particle size distribution as measured by a laser scattering method using a laser scattering particle size analyzer (e.g., Microtrac).

The oxidized polyethylene wax is preferably used in a dissolved or dispersed state in a solvent and more preferably used in a state of emulsion dispersed in a solvent. The solvent is preferably an aqueous medium and more preferably the same aqueous medium as the aqueous medium used in the solvent of the aqueous ink composition.

The oxidized polyethylene wax can be used singly or in combination of two or more.

A commercially available product can be used as the oxidized polyethylene wax. Examples of preferred commercially available products include AQUACER 515 and AQUACER 1547 available from BYK-Chemie GmbH.

The amount of the oxidized polyethylene wax is preferably 0.1% by mass or more, and may be 0.2% by mass or more or 0.3% by mass or more of the total amount of the aqueous ink composition in terms of excellent image fastness. The amount of the oxidized polyethylene wax is, for example, 5% by mass or less, and may be 3% by mass or less or 2% by mass or less of the total amount of the aqueous ink composition, in terms of easily achieving sufficient ejection stability. In these respects, the amount of the oxidized polyethylene wax may be 0.1 to 5% by mass of the total amount of the aqueous ink composition.

The amount of the oxidized polyethylene wax is preferably 1.6 parts by mass or more, and may be 4 parts by mass or more or 6 parts by mass or more per 100 parts by mass of the total of the pigment and the dye in terms of excellent image fastness. The amount of the oxidized polyethylene wax is, for example, 500 parts by mass or less, and may be 350 parts by mass or less or 200 parts by mass or less per 100 parts by mass of the total of the pigment and the dye, in terms of easily achieving sufficient ejection stability. In these respects, the amount of the oxidized polyethylene wax may be 1.6 to 500 parts by mass per 100 parts by mass of the total of the pigment and the dye.

The ratio of the amount of the oxidized polyethylene wax to the amount of the acid-modified polypropylene resin (the amount of the oxidized polyethylene wax/the amount of the acid-modified polypropylene resin) is, for example, 0.03 to 10 in terms of more excellent setting properties and image fastness and suppressing mottling more. The ratio may be 0.03 or more, 0.1 or more, 0.2 or more, or 0.3 or more, and may be 10 or less, 2.0 or less, or 1.5 or less. In the present embodiment, in particular, the ratio of the amount of the oxidized polyethylene wax to the amount of the high-density acid-modified polypropylene resin is preferably in the above range.

The aqueous ink composition may contain a wax other than the oxidized polyethylene wax as the wax. However, the amount of the oxidized polyethylene wax per 100 parts by mass of the total wax is preferably 80 parts by mass or more, and may be 90 parts by mass or more, 95 parts by mass or more, or 100 parts by mass.

[Other Components]

In addition to the components described above, the aqueous ink composition may further include other additives such as a surfactant, a pigment dispersant, a wetting agent (drying retarder), a penetrating agent, a preservative, a viscosity adjuster, a pH adjuster, a chelating agent, a plasticizer, an antioxidant, and a UV absorber, if necessary.

The use of a surfactant facilitates prevention of the occurrence of streaky print defects, for example, because the droplets of the aqueous ink composition ejected from the ejection holes of inkjet heads spread on a surface well after landing on a material to be printed. Furthermore, the use of a surfactant can reduce the surface tension of the aqueous ink composition, for example, thereby improving the leveling properties of the aqueous ink composition.

Examples of the surfactant that can be used include anionic surfactants, nonionic surfactants, cationic surfactants, and amphoteric surfactants. The surfactant is preferably one or more selected from the group consisting of anionic surfactants and nonionic surfactants in terms of easily suppressing the occurrence of streaky print detects.

Examples of the anionic surfactants include alkyl benzene sulfonates, alkyl phenyl sulfonates, alkyl naphthalene sulfonates, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates. Specific examples of these include dodecyl benzene sulfonates, isopropylnaphthalene sulfonates, monobutylphenylphenol monosulfonates, monobutylbiphenyl sulfonates, and dibutylphenylphenol disulfonates.

Examples of the nonionic surfactants include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerol fatty acid esters, polyoxyethylene glycerol fatty acid esters, polyglycerol fatty acid esters, sucrose fatty acid esters, polyoxyethylene alkylamines, polyoxyethylene fatty acid amides, fatty acid alkylolamides, alkyl alkanolamides, acetylene glycols, oxyethylene adducts of acetylene glycols, and polyethylene glycol-polypropylene glycol block copolymers. Among these, one or more selected from the group consisting of polyoxyethylene nonylphenyl ethers, polyoxyethylene octylphenyl ethers, polyoxyethylene dodecylphenyl ethers, polyoxyethylene alkyl ethers, polyoxyethylene fatty acid esters, sorbitan fatty acid esters, polyoxyethylene sorbitan fatty acid esters, fatty acid alkylolamides, acetylene glycols, oxyethylene adducts of acetylene glycols, and polyethylene glycol-polypropylene glycol block copolymers are preferred.

Preferably, the aqueous ink composition contains an acetylene-based surfactant in terms of easily suppressing the occurrence of streaky print detects. The acetylene-based surfactant is a surfactant having an acetylene structure in the molecule. The acetylene-based surfactant preferably includes one or more selected from the group consisting of acetylene glycols and oxyethylene adducts of acetylene glycols in terms of easily suppressing the occurrence of streaky print defects.

The amount of the acetylene-based surfactant is preferably 80 to 100% by mass, more preferably 85 to 99.9% by mass, even more preferably 90 to 99.5% by mass, and particularly preferably 95 to 99.3% by mass of the total amount of the surfactant, in terms of easily suppressing the occurrence of streaky print detects.

For the aqueous ink composition used in the present invention, it is preferable to use a surfactant containing a polyether-modified siloxane, instead of the above acetylene-based surfactant or in combination with the above acetylene-based surfactant in order to further reduce the granularity.

As the polyether-modified siloxane, TEGO Wet KL 245, 250, 260, 265, 270, 280, or the like available from EVONIK can be used.

It is preferable to use the polyether-modified siloxane in the range of 0.05% by mass to 0.5% by mass of the total amount of the ink in order to improve the wettability of the ink on a recording medium and to further reduce the granularity.

In the present invention, it is preferable to use the acetylene-based surfactant and the polyether-modified siloxane in combination in order to further reduce the granularity. In this case, it is preferable to use the acetylene-based surfactant and the polyether-modified siloxane in a range in which [the polyether-modified siloxane/the acetylene-based surfactant] is 0.05 to 0.5 in order to further reduce the granularity.

Other examples of the surfactant that can be used include, in addition to those described above, fluorosurfactants such as perfluoroalkyl carboxylates, perfluoroalkyl sulfonates, and oxyethylene perfluoroalkyl ethers; and biosurfactants such as spiculisporic acid, rhamnolipid, and lysolecithin.

The amount of the surfactant is preferably 0.001 to 5% by mass, more preferably 0.001 to 3% by mass, even more preferably 0.001 to 2% by mass, particularly preferably 0.01 to 2% by mass, extremely preferably 0.1 to 2% by mass, very preferably 0.5 to 2% by mass, further more preferably 0.8 to 2% by mass, and even more preferably 1 to 1.6% by mass of the total amount of the aqueous ink composition. The ejected droplets of the aqueous ink composition containing a surfactant in such an amount have high wettability of a surface of a material to be printed and sufficiently spread over the material to be printed, thereby easily achieving the effect of preventing the occurrence of streaky print detects. Furthermore, the aqueous ink composition containing a surfactant in the above ranges easily improves the leveling properties of the coating. In this respect, the amount of the acetylene-based surfactant is preferably within the above ranges.

Examples of the pigment dispersant that can be used include polyvinyl alcohols, polyvinyl pyrrolidones, acrylic resins such as acrylic acid-acrylic ester copolymers, styrene-acrylic resins such as styrene-acrylic acid copolymers, styrene-methacrylic acid copolymers, styrene-methacrylic acid-acrylic ester copolymers, styrene-$\alpha$-methylstyrene-acrylic acid copolymers, and styrene-$\alpha$-methylstyrene-acrylic acid-acrylic acid copolymers, aqueous resins such as styrene-maleic acid copolymers, styrene-maleic anhydride copolymers, and vinylnaphthalene-acrylic acid copolymers, and salts of the aqueous resins. AJISPER PB series available from Ajinomoto Fine Techno Co., Inc., DISPERBYK series available from BYK Japan KK, EFKA series available from BASF SE, Solsperse series available from Lubrizol Japan Limited, TEGO series available from Evonik Industries AG, and the like can be used as the pigment dispersant. The compounds listed as the polymer (G) in WO2018/190139 can also be used as the pigment dispersant.

The wetting agent can be used for preventing the aqueous ink composition from drying at the ejection nozzles of inkjet heads. The wetting agent is preferably the one that is miscible with water and can prevent clogging of ejection holes of inkjet heads. Examples include ethylene glycol, diethylene glycol, triethylene glycol, polyethylene glycol with a molecular weight of 2000 or less, propylene glycol, dipropylene glycol, tripropylene glycol, isopropylene glycol, isobutylene glycol, 1,4-butanediol, 1,3-butanediol, 1,5-pentanediol, 1,6-hexanediol, meso-erythritol, pentaerythritol, and glycerol.

A solid wetting agent can also be used as the wetting agent. Examples of such a wetting agent include urea and urea derivatives. Examples of the urea derivatives include ethylene urea, propylene urea, diethyl urea, thiourea, N,N-dimethyl urea, hydroxyethyl urea, hydroxybutyl urea, ethylenethiourea, and diethylthiourea. These can be used singly or in combination of two or more. Preferably, at least one selected from the group consisting of urea, ethylene urea, and 2-hydroxyethyl urea is used in terms of easily producing printed matter with excellent setting properties.

The amount of the wetting agent may be 3 to 50% by mass of the total amount of the aqueous ink composition.

Examples of the penetrating agent include lower alcohols such as ethanol and isopropyl alcohol; and glycol monoethers such as ethylene glycol monomethyl ether, ethylene glycol monoethyl ether, ethylene glycol monopropyl ether, ethylene glycol monobutyl ether, diethylene glycol monomethyl butyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, tripropylene glycol monopropyl ether, and tripropylene glycol monobutyl ether. The amount of the penetrating agent is preferably 3% by mass or less, more preferably 1% by mass or less of the total amount of the aqueous ink composition, and even more preferably, the aqueous ink composition contains substantially no penetrating agent.

The pH of the aqueous ink composition is preferably 7.0 or higher, more preferably 7.5 or higher, and even more preferably 8.0 or higher in order to improve storage stability and ejection stability of the aqueous ink composition, and to improve wetting, printing density, and abrasion resistance in printing on a less-ink-absorbent or non-ink-absorbent recording medium. The upper limit of pH of the aqueous ink composition is preferably 11.0 or lower, more preferably 10.5 or lower, and even more preferably 10.0 or lower, in order to suppress deterioration of members of an ink-applying or ejecting device (e.g., ink ejection holes, ink channels, etc.) and to reduce the effect of ink adhering to the skin. In these respects, the pH of the aqueous ink composition is preferably 7.0 to 11.0. The above pH is the pH at 25°C.

The viscosity of the aqueous ink composition is, for example, 2 mPa·s or higher and lower than 10 mPa·s at 25°C. When the aqueous ink composition having a viscosity within this range is used in the inkjet recording method, the displacement of ink droplets landing on a recording medium due to flight deflection is alleviated in appearance, and the occurrence of streaks on printed matter tends to be prevented effectively. The aqueous ink composition having a viscosity in this range tends to be excellent in storage stability and ejection stability in the inkjet recording method. The viscosity of the aqueous ink composition at 25°C is preferably 2 mPa·s or higher and more preferably 3 mPa·s or higher. The viscosity of the aqueous ink composition at 25°C is preferably 5 mPa·s or lower and more preferably 4 mPa·s or lower. The viscosity is the value measured, for example, using a cone- and-plate rotational viscometer equivalent to an E-type viscometer, under the following conditions.

Measuring device: TVE-25 viscometer (TVE-25 L available from Toki Sangyo Co., Ltd.)
Standard liquid for calibration: JS20
Measuring temperature: 25°C
Rotation speed: 10 to 100 rpm
Injection volume: 1200 μL

The surface tension of the aqueous ink composition is, for example, 20 to 40 mN/m at 25°C. When the aqueous ink composition having a surface tension within this range is used in the inkjet recording method, the wettability of the ejected droplets with the surface of a recording medium tends to be high, and the droplets tend to sufficiently spread after landing. The surface tension of the aqueous ink composition at 25°C is preferably 25 mN/m or higher and more preferably 27 mN/m or higher. The surface tension of the aqueous ink composition at 25°C is preferably 35 mN/m or lower and more preferably 32 mN/m or lower.

The aqueous ink composition in an embodiment described above can be produced by mixing the components listed above. Specifically, the aqueous ink composition can be produced by producing the aqueous pigment dispersion and the aqueous dye composition in advance, mixing them, and, if necessary, supplying and mixing an aqueous medium, a binder resin, a wax, a surfactant, and the like.

The aqueous ink composition may also be produced by supplying and mixing the aqueous pigment dispersion, and if necessary, a binder, a wax, a surfactant, and the like with an aqueous dye composition containing an aqueous medium and a dye.

The components listed above may be mixed in a batch or may be mixed sequentially. For example, the binder resin (e.g., the acid-modified polypropylene resin) and the wax (e.g., the oxidized polyethylene wax) may be dissolved or dispersed in an aqueous medium before mixing. The pigment may be dispersed in an aqueous medium together with a pigment dispersant before mixing. For mixing, a disperser such as a beads mill, an ultrasonic homogenizer, a high-pressure homogenizer, a paint shaker, a ball mill, a roll mill, a sand mill, a sand grinder, Dyno-Mill, DISPERMAT, SC mill, or Nano-Mizer can be used. After mixing, centrifugation, filtration, and the like may be performed if necessary.

The aqueous ink composition in the foregoing embodiment may be stored in separate liquids which can be mixed into an aqueous ink composition.

An ink set of the present invention includes an ink set composed of aqueous ink compositions of the present invention of two or more colors, each containing an aqueous pigment dispersion having a hue angle $h^1$ in L*C*h color space and an aqueous dye composition having a hue angle $h^2$ in L*C*h color space, or an ink set composed of the aqueous ink composition of the present invention described above and an aqueous ink composition other than the aqueous ink composition of the present invention.

More specifically, an ink set in which at least one of a black aqueous ink composition, a cyan aqueous ink composition, a magenta aqueous ink composition, and a yellow aqueous ink composition is an aqueous ink composition that satisfies the constitution of the present invention can be used as the ink set of the present invention.

More specifically, an ink set composed of a yellow aqueous ink composition containing a combination of C.I. Pigment Yellow 74 and Acid Red 151, and an optional black aqueous ink composition, cyan aqueous ink composition, and magenta aqueous ink composition can be used as the ink set of the present invention.

(Printed Matter and Production Method for Printed Matter)

Printed matter in an embodiment is printed matter made by printing the aqueous ink composition in the foregoing embodiment on a surface of a recording medium. The printed matter has a recording medium and an ink coating printed on a surface of the recording medium. The ink coating formed on the surface of the recording medium is, for example, a dried product of the aqueous ink composition and contains the solid contents in the aqueous ink composition in the foregoing embodiment (e.g., the total of the pigment and the dye, the acid-modified polypropylene resin, and the oxidized polyethylene wax). The recording medium is, for example, the less-ink-absorbent or non-ink-absorbent recording medium described above and may be an ink-absorbent recording medium. The printed matter has sufficient image fastness, whether the recording medium is the less-ink-absorbent or non-ink-absorbent medium described above or the ink-absorbent recording medium.

The printed matter is produced, for example, by printing the aqueous ink composition in the foregoing embodiment on a surface of a recording medium by the inkjet recording method. Specifically, the printed matter can be produced by ejecting and printing the aqueous ink composition on a recording medium by the inkjet recording method in which the distance from a surface (x) having ink ejection holes of an inkjet head to a position (y) where a normal to the surface (x) intersects the recording medium is 1 mm or more.

[Examples]

The invention will be described in more detail below with examples, but the invention is not limited to these examples.

<Preparation of Resin Dispersion>

(Preparation Example 1)

A random polypropylene resin (propylene component 75 mol%, ethylene component 5 mol%, butene component 20 mol%, weight average molecular weight 65,000) was produced using a Ziegler-Natta catalyst as a polymerization catalyst.

Subsequently, 100 parts by mass of the resulting random polypropylene resin, 6 parts by mass of maleic anhydride, 3 parts by mass of ethyl methacrylate, and 1.5 parts by mass of di-t-butyl peroxide were blended and allowed to react using a twin-screw extruder set at a barrel temperature of 160°C. The extruder was degassed under a reduced pressure to remove any residual unreacted material, yielding an acid-modified polypropylene resin. The resulting acid-modified polypropylene resin had a weight average molecular weight of 55,000, the graft weight of maleic anhydride was 5.2% by mass, the graft weight of di-t-butyl peroxide was 1.3% by mass, and the melting point ($Tm_1$) was 70°C.

In a four-necked flask equipped with a stirrer, a condenser, a thermometer, and a funnel, 100 g of the resulting acid-modified polypropylene resin, 20 g of polyoxyethylene lauryl ether (surfactant), 10 g of morpholine (neutralizer), and 20 g of toluene (solvent) were added and blended at 120°C for 30 minutes. Then, 290 g of deionized water at 90°C was added over 90 minutes. Subsequently, the solvent was removed under a reduced pressure, and then the mixture was cooled to room temperature while being stirred, yielding a dispersion of the acid-modified polypropylene resin as a binder (resin dispersion). The resulting resin dispersion had an average particle size of 151 nm and a pH of 9.0. The concentration of the acid-modified polypropylene resin in the resin dispersion was adjusted to 30% by mass.

<Preparation of Pigment Dispersion>

(Preparation Example 2-1)

"FASTOGEN BLUE SBG-SD" (product name, C.I. Pigment Blue 15:3) from DIC Corporation was prepared as a cyan pigment, and a pigment dispersion C (pigment concentration: 20% by mass) was prepared by the following method. First, 150 g of the cyan pigment, 60 g of a pigment dispersant, 75 g of propylene glycol, and 19.4 g of a 34% by mass potassium hydroxide solution were charged in a 1.0 L intensive mixer (available from Nippon Eirich Co., Ltd.) and blended for 25 minutes at a rotor peripheral speed of 2.94 m/s and a pan peripheral speed of 1 m/s. Subsequently, 306 g of ion-exchange water was gradually added to the mixture in the vessel of the intensive mixer with continuous stirring, and then 12 g of propylene glycol and 127.5 g of ion-exchange water were further added so that the pigment concentration became 20% by mass, yielding an aqueous pigment dispersion (pigment dispersion C) with a pigment concentration of 20% by mass. The pigment dispersant used was the polymer (P-1) prepared according to Synthesis Example 1 in WO2018/190139.

(Preparation Example 2-2)

"FASTOGEN SUPER MAGENTA RY" (product name, C.I. Pigment Red 122) from DIC Corporation was prepared as a magenta pigment, and a pigment dispersion M (pigment concentration: 20% by mass) was prepared in the same way as in Preparation Example 2-1, except that the magenta pigment was used instead of the cyan pigment.

(Preparation Example 2-3)

"FAST YELLOW 7413" (product name, C.I. Pigment Yellow 74) from SANYO COLOR WORKS, Ltd. was prepared as a yellow pigment, and a pigment dispersion Y (pigment concentration: 20% by mass) was prepared in the same way as in Preparation Example 2-1, except that the yellow pigment was used instead of the cyan pigment.

<Dye>

The following dyes were prepared.

(Blue Dye)

- Acid Blue 90
- Acid Blue 9

(Red Dye)

- Acid Red 73
- Acid Red 151
- Acid Red 249

(Yellow Dye)

- Acid Yellow 23

<Preparation of Aqueous Ink Composition>

(Examples and Comparative Examples)

The pigment dispersions and the resin dispersion produced as described above were used. The pigment dispersions listed in the following tables, aqueous dye compositions containing dyes and an aqueous medium, the resin dispersion, propylene glycol, glycerol, triethanolamine, TEGO Wet 280 (from Evonik Industries AG, silicone surfactant containing a polyether-modified siloxane), ACTICIDE B20 (from Thor Japan, preservative), ethylene urea, SURFYNOL 420 (from Evonik Industries AG, acetylene-based surfactant), AQUACER 515 (from BYK-Chemie GmbH, high-density oxidized polyethylene wax emulsion, melting point ($Tm_2$) 135°C), and distilled water were mixed and stirred to yield aqueous ink compositions of examples and comparative examples.

The amount of the pigment dispersion was adjusted for each pigment so that the amount of the pigment was as listed in the following tables. Specifically, the amount of the pigment dispersion was 22% by mass (pigment: 6.0% by mass) for the pigment dispersion C, 30% by mass (pigment: 6.0% by mass) for the pigment dispersion M, and 17% by mass (pigment: 5.0% by mass) for the pigment dispersion Y. The amount of the dye was as listed in the following tables. The amount of propylene glycol was 10 to 20% by mass so that the viscosity (25°C) of the aqueous ink composition was 4.0 Pa·s. The amounts of glycerol, triethanolamine, ACTICIDE B20, ethylene urea, SURFYNOL 420, and AQUACER 515 were 2.0% by mass, 0.5% by mass, 0.1% by mass, 5.62% by mass, and 1.00% by mass, respectively. The concentration of TEGO Wet 280 was as listed in the following tables. The distilled water was added so that the total amount of the added components was 100% by mass. All of the amounts above are based on the total amount of the aqueous ink composition.

<Characteristics Evaluation>

The hue angles $h^1$ and $h^2$ were calculated by the following method. The pigment dispersions and the aqueous dye compositions containing dyes and an aqueous medium used in the production of the aqueous ink compositions described above were prepared. A sample was then prepared by diluting the pigment dispersion with distilled water so that the pigment concentration was 0.002% by mass. A sample was also prepared by diluting the aqueous dye composition with distilled water so that the dye concentration was 0.002% by mass.

The absorbance of the samples was measured using a spectrophotometer (light source C). L*a*b* was calculated based on a value obtained by normalizing the determined absorbance to 1. The hue angles $h^1$ and $h^2$ were calculated using the above value and the following formula.

$$\text{Hue angle } h = \tan^{-1}(b^*/a^*)$$

[Table 1]

| | Hue angle $h^1$ | Hue angle $h^2$ |
|---|---|---|
| Sample obtained by diluting pigment dispersion C | 220° | - |
| Sample obtained by diluting pigment dispersion M | 336° | - |
| Sample obtained by diluting pigment dispersion Y | 98° | - |
| Sample obtained by diluting aqueous dye composition containing Acid Blue 90 and distilled water | - | 274° |
| Sample obtained by diluting aqueous dye composition containing Acid Blue 9 and distilled water | - | 216° |
| Sample obtained by diluting aqueous dye composition containing Acid Red 73 and distilled water. | - | 18° |
| Sample obtained by diluting aqueous dye composition containing Acid Red 151 and distilled water | - | 9° |
| Sample obtained by diluting aqueous dye composition containing Acid Red 249 and distilled water | - | 346° |

(continued)

| | Hue angle h[1] | Hue angle h[2] |
|---|---|---|
| Sample obtained by diluting aqueous dye composition containing Acid Yellow 23 and distilled water | - | 107° |

The characteristics (ease of hue adjustment (preference color), image fastness, granularity, and color unevenness or muddiness) of the aqueous ink compositions (aqueous inkjet inks) of examples and comparative examples were evaluated by the method described below, and the evaluation results in the following tables were obtained. In the following evaluation, the supply pressure in printing was adjusted by setting the hydraulic head difference of the ink sub-tank from the head nozzle plate surface to +35 cm and the negative pressure to - 5.0 kPa. The minimum distance between the ink ejection holes of the inkjet head and the recording medium (the distance (gap) from the surface (x) having ink ejection holes of the inkjet head to a position (y) where an imaginary normal to the surface (x) intersects the recording medium) was set to 1 mm. The driving conditions of the head include the standard voltage and the standard temperature of inkjet heads, and the droplet size was set to 10 pL.

[Ease of Hue Adjustment (Preference Color)]

An aqueous ink composition with a large difference between the hue angles $h^1$ and $h^2$ measured by the method described above for the pigment dispersion and the aqueous dye composition used in the production of the aqueous ink composition can be said to be easy to control a hue, have a high degree of freedom, and be easy to design a desired preference color. Therefore, the ease of hue adjustment was evaluated based on the difference between the hue angles $h^1$ and $h^2$.

5: The difference (absolute value) between hue angles $h^1$ and $h^2$ is 110° or greater.
4: The difference (absolute value) between hue angles $h^1$ and $h^2$ is 80° or greater and smaller than 110°.
3: The difference (absolute value) between hue angles $h^1$ and $h^2$ is 50° or greater and smaller than 80°.
2: The difference (absolute value) between hue angles $h^1$ and $h^2$ is 20° or greater and smaller than 50°.
1: The difference (absolute value) between hue angles $h^1$ and $h^2$ is smaller than 20°.

(Optical Density)

The aqueous ink compositions of the examples and comparative examples were each charged into an inkjet head I3200 available from Seiko Epson Corporation. The resolution is 600 dpi × 600 dpi, and a condition that one drop of ink with a mass of 10 ng ± 10% per drop is applied to a unit area of 1/600 inch × 1/600 inch is defined as a recording duty of 100%.

A solid image (2cm × 2cm/1 line) with a recording duty of 100% was recorded on a recording medium (plain paper). The recording medium used was the product name "NPI high-quality paper" (Yatsushiro, available from Nippon Paper Industries, Co., Ltd., a basis weight of 52.3 g/m$^2$). One day after the recording, the optical densities in three solid images were measured using a spectrophotometer (product name "eXact" available from X-rite), and the optical density was evaluated based on their average value. The optical density was evaluated based on the following criteria.

5: Optical density is 1.10 or more.
4: Optical density is 0.90 or more and less than 1.10.
3: Optical density is 0.70 or more and less than 0.90.
2: Optical density is 0.50 or more and less than 0.70.
1: Optical density is less than 0.50.

[Image Fastness Evaluation (Plain Paper)]

The aqueous ink compositions of the examples and comparative examples were each charged into an inkjet head I3200 available from Seiko Epson Corporation. 100% solid printing was performed on plain paper (NPI high-quality paper/Yatsushiro available from Nippon Paper Industries, Co., Ltd., a basis weight of 52.3 g/m$^2$), which was an ink-absorbent recording medium, to produce a coating of the aqueous ink composition. The resulting coating was dried at room temperature (25°C) for 12 hours (overnight). Subsequently, 0.03 g of distilled water was dropped onto the dried coating, and color bleeding was visually observed to evaluate the image fastness based on the following criteria.
5: No color bleeding on the printed surface, and no color bleeding is observed on the reverse side of plain paper.
4: Slight light color bleeding on the printed surface, but no color bleeding is observed on the reverse side of plain paper
3: Slight light color bleeding on the printed surface, and slight light color bleeding is also observed on the reverse side of plain paper.
2: Color bleeding on the printed surface, and color bleeding is also observed on the reverse side of plain paper.
1: Color bleeding on the printed surface, and color bleeding is also clearly observed on the reverse side of plain paper.

[Granularity Evaluation]

The aqueous ink compositions of the examples and comparative examples were each charged into an inkjet head I3200 available from Seiko Epson Corporation. 50% solid printing was performed on OK TopKote+ (available from Oji Paper Co., Ltd., a basis weight of 104.7 g/m$^2$), which was a less-ink-absorbent recording medium, to produce a coating of the aqueous ink composition. The resulting coating was dried for one second with a 9 kW near-infrared heater at a distance of approximately 8 cm from the base material. Subsequently, the dried coating was numerically analyzed using an image quality analyzer "PIAS-II" from Quality Engineering Associates, Inc. Specifically, the graininess (the degree of granularity) of each coating was measured, and the degree of suppressing the granularity was evaluated based on the following criteria.

5: Graininess is less than 4.
4: Graininess is 4 or more and less than 5.
3: Graininess is 5 or more and less than 6.
2: Graininess is 6 or more and less than 7.
1: Graininess is 7 or more.

[Color Unevenness, Muddiness]

The aqueous ink compositions of the examples and comparative examples were each charged into an inkjet head I3200 available from Seiko Epson Corporation. Using the charged aqueous ink composition, 100% solid printing was immediately performed on OK TopKote+ (available from Oji Paper Co., Ltd., a basis weight of 104.7 g/m$^2$) to produce a coating of the aqueous ink composition. The resulting coating was dried at room temperature (25°C) for 12 hours (overnight). The color difference of the coating was measured using a colorimeter (product name "eXact" available from X-rite).
Subsequently, the aqueous ink compositions of the examples and comparative examples were each charged into an inkjet head similar to the above and left in an environment at 25°C for one month.
Using the aqueous ink composition after being left, 100% solid printing was performed on OK TopKote+ (available from Oji Paper Co., Ltd., a basis weight of 104.7 g/m$^2$) to produce a coating of the aqueous ink composition. The resulting coating was dried at room temperature (25°C) for 12 hours (overnight). The color difference of the coating was measured using a colorimeter (product name "eXact" available from X-rite).
Color change over time was evaluated according to the following evaluation criteria, based on the difference (delta E) between the color difference of printed matter obtained by printing immediately after charging and the color difference of printed matter obtained by printing after one month of leaving after charging.

5: Delta E is less than 1.
4: Delta E is 1 or more and less than delta 2.
3: Delta E is 2 or more and less than delta 3.
2: Delta E is 3 or more and less than delta 4.
1: Delta E is 4 or more.

[Table 2]

|  | Ex. 1 | Ex. 2 | Ex. 3 | Ex. 4 |
|---|---|---|---|---|
| Color of Aqueous Ink Composition | Yellow | Yellow | Yellow | Yellow |
| Pigment dispersion (parts by mass) | 5.0 | 5.0 |  | 5.0 |
| Pigment Blue 15:4 (parts by mass) |  |  |  |  |
| Pigment Red 122 (parts by mass) |  |  |  |  |

(continued)

| | Ex. 1 | Ex. 2 | Ex. 3 | Ex. 4 |
|---|---|---|---|---|
| Pigment Yellow 155 (parts by mass) | | | 5.0 | |
| Acid Blue 90 (parts by mass) | | | | |
| Acid Blue 9 (parts by mass) | | | | |
| Acid Red 73 (parts by mass) | | | | 0.5 |
| Acid Red 151 (parts by mass) | 0.06 | 0.5 | 0.06 | |
| Acid Red 249 (parts by mass) | | | | |
| Acid Yellow 23 (parts by mass) | | | | |
| TEGO Wet 280 (TW280) | 0.1 | 0.1 | 0.1 | 0.1 |
| Surfynol 420 (SF420) | 1.0 | 1.0 | 1.0 | 1.0 |
| TW280/SF420 | 0.1 | 0.1 | 0.1 | 0.1 |
| Optical density (plain paper) | 3 | 3 | 3 | 3 |
| Image fastness (plain paper) | 5 | 4 | 5 | 3 |
| Granularity | 4 | 4 | 4 | 4 |
| Hue change | 4 | 5 | 3 | 4 |
| Color unevenness, muddiness | 4 | 3 | 4 | 4 |

[Table 3]

| | Ex. 5 | Ex. 6 | Ex. 7 | Ex. 8 |
|---|---|---|---|---|
| Color of Aqueous Ink Composition | Cyan | Cyan | Cyan | Cyan |
| Pigment dispersion (parts by mass) | | 6.0 | 6.0 | 6.0 |
| Pigment Blue 15:4 (parts by mass) | 6.0 | | | |
| Pigment Red 122 (parts by mass) | | | | |
| Pigment Yellow 155 (parts by mass) | | | | |
| Acid Blue 90 (parts by mass) | | | | |
| Acid Blue 9 (parts by mass) | | | | |
| Acid Red 73 (parts by mass) | | | | |
| Acid Red 151 (parts by mass) | | | | |
| Acid Red 249 (parts by mass) | | | | |
| Acid Yellow 23 (parts by mass) | 0.06 | 0.5 | 0.06 | 0.06 |
| TEGO Wet 280 (TW280) | 0.2 | 0.2 | 0.5 | 0.04 |
| Surfynol 420 (SF420) | 1.0 | 1.0 | - | 1.0 |
| TW280/SF420 | 0.2 | 0.2 | - | 0.04 |
| Optical density (plain paper) | 4 | 4 | 4 | 4 |
| Image fastness (plain paper) | 4 | 3 | 4 | 4 |
| Granularity | 4 | 5 | 4 | 3 |
| Hue change | 5 | 5 | 5 | 5 |
| Color unevenness, muddiness | 4 | 4 | 4 | 4 |

[Table 4]

| | Ex. 9 | Ex. 10 | Ex. 11 |
|---|---|---|---|
| Color of Aqueous Ink Composition | Cyan | Cyan | Cyan |
| Pigment dispersion (parts by mass) | 6.0 | 6.0 | 6.0 |
| Pigment Blue 15:4 (parts by mass) | | | |
| Pigment Red 122 (parts by mass) | | | |
| Pigment Yellow 155 (parts by mass) | | | |
| Acid Blue 90 (parts by mass) | | | |
| Acid Blue 9 (parts by mass) | | | 1.2 |
| Acid Red 73 (parts by mass) | | | |
| Acid Red 151 (parts by mass) | | | |
| Acid Red 249 (parts by mass) | | | |
| Acid Yellow 23 (parts by mass) | 0.06 | | |
| TEGO Wet 280 (TW280) | 0.2 | 0.5 | 0.2 |
| Surfynol 420 (SF420) | 1.0 | 1.0 | 1.0 |
| TW280/SF420 | 0.2 | 0.5 | 0.2 |
| Optical density (plain paper) | 4 | 4 | 5 |
| Image fastness (plain paper) | 4 | 4 | 3 |
| Granularity | 4 | 3 | 5 |
| Hue change | 5 | 5 | 3 |
| Color unevenness, muddiness | 4 | 4 | 3 |

[Table 5]

| | Ex. 12 | Ex. 13 | Ex. 14 | Ex. 15 |
|---|---|---|---|---|
| Color of Aqueous Ink Composition | Magenta | Magenta | Magenta | Magenta |
| Pigment dispersion (parts by mass) | 6.0 | 6.0 | | 6.0 |
| Pigment Blue 15:4 (parts by mass) | | | | |
| Pigment Red 122 (parts by mass) | | | 6.0 | |
| Pigment Yellow 155 (parts by mass) | | | | |
| Acid Blue 90 (parts by mass) | | | | |
| Acid Blue 9 (parts by mass) | | | | |
| Acid Red 73 (parts by mass) | | | | 0.5 |
| Acid Red 151 (parts by mass) | | | | |
| Acid Red 249 (parts by mass) | | | | |
| Acid Yellow 23 (parts by mass) | 0.06 | 0.5 | 0.06 | |
| TEGO Wet 280 (TW280) | 0.2 | 0.5 | 0.2 | 0.2 |
| Surfynol 420 (SF420) | 1.0 | 1.0 | 1.0 | 1.0 |
| TW280/SF420 | 0.2 | 0.5 | 0.2 | 0.2 |
| Optical density (plain paper) | 3 | 4 | 3 | 4 |

(continued)

|  | Ex. 12 | Ex. 13 | Ex. 14 | Ex. 15 |
|---|---|---|---|---|
| Image fastness (plain paper) | 5 | 4 | 5 | 3 |
| Granularity | 4 | 4 | 4 | 4 |
| Hue change | 4 | 5 | 4 | 5 |
| Color unevenness, muddiness | 4 | 4 | 4 | 4 |

[Table 6]

|  | Comp. Ex. 1 | Comp. Ex. 2 | Comp. Ex. 3 | Comp. Ex. 4 |
|---|---|---|---|---|
| Color of Aqueous Ink Composition | Yellow | Yellow | Yellow | Yellow |
| Pigment dispersion (parts by mass) | 5.0 |  | 5.0 | 5.0 |
| Pigment Blue 15:4 (parts by mass) |  |  |  |  |
| Pigment Red 122 (parts by mass) |  |  |  |  |
| Pigment Yellow 155 (parts by mass) |  |  |  |  |
| Acid Blue 90 (parts by mass) |  |  |  |  |
| Acid Blue 9 (parts by mass) |  |  |  |  |
| Acid Red 73 (parts by mass) |  |  |  | 2.0 |
| Acid Red 151 (parts by mass) |  |  |  |  |
| Acid Red 249 (parts by mass) |  |  |  |  |
| Acid Yellow 23 (parts by mass) |  | 5.0 | 0.5 |  |
| Optical density (plain paper) | 3 | 4 | 3 | 4 |
| Image fastness (plain paper) | 5 | 1 | 3 | 1 |
| Granularity | 3 | 5 | 4 | 3 |
| Hue change | 1 | 1 | 2 | 5 |
| Color unevenness, muddiness | 5 | 5 | 4 | 2 |

[Table 7]

|  | Comp. Ex. 5 | Comp. Ex. 6 | Comp. Ex. 7 | Comp. Ex. 8 |
|---|---|---|---|---|
| Color of Aqueous Ink Composition | Cyan | Cyan | Cyan | Cyan |
| Pigment dispersion (parts by mass) | 6.0 |  | 6.0 | 6.0 |
| Pigment Blue 15:4 (parts by mass) |  |  |  |  |
| Pigment Red 122 (parts by mass) |  |  |  |  |
| Pigment Yellow 155 (parts by mass) |  |  |  |  |
| Acid Blue 90 (parts by mass) |  |  |  | 3.0 |
| Acid Blue 9 (parts by mass) |  | 6.0 | 0.2 |  |
| Acid Red 73 (parts by mass) |  |  |  |  |
| Acid Red 151 (parts by mass) |  |  |  |  |
| Acid Red 249 (parts by mass) |  |  |  |  |
| Acid Yellow 23 (parts by mass) |  |  |  |  |

(continued)

|  | Comp. Ex. 5 | Comp. Ex. 6 | Comp. Ex. 7 | Comp. Ex. 8 |
|---|---|---|---|---|
| Optical density (plain paper) | 3 | 5 | 4 | 5 |
| Image fastness (plain paper) | 5 | 1 | 1 | 1 |
| Granularity | 3 | 5 | 5 | 5 |
| Hue change | 1 | 1 | 1 | 5 |
| Color unevenness, muddiness | 5 | 5 | 5 | 2 |

[Table 8]

|  | Comp. Ex. 9 | Comp. Ex. 10 | Comp. Ex. 11 | Comp. Ex. 12 |
|---|---|---|---|---|
| Color of Aqueous Ink Composition | Magenta | Magenta | Magenta | Magenta |
| Pigment dispersion (parts by mass) | 5.5 |  | 5.5 | 5.5 |
| Pigment Blue 15:4 (parts by mass) |  |  |  |  |
| Pigment Red 122 (parts by mass) |  |  |  |  |
| Pigment Yellow 155 (parts by mass) |  |  |  |  |
| Acid Blue 90 (parts by mass) |  |  |  |  |
| Acid Blue 9 (parts by mass) |  |  |  |  |
| Acid Red 73 (parts by mass) |  |  |  | 3.0 |
| Acid Red 151 (parts by mass) |  |  |  |  |
| Acid Red 249 (parts by mass) |  | 5.5 | 0.2 |  |
| Acid Yellow 23 (parts by mass) |  |  |  |  |
| Optical density (plain paper) | 3 | 4 | 3 | 5 |
| Image fastness (plain paper) | 5 | 1 | 1 | 2 |
| Granularity | 3 | 5 | 5 | 4 |
| Hue change | 1 | 1 | 1 | 2 |
| Color unevenness, muddiness | 5 | 5 | 4 | 2 |

## Claims

1. An aqueous ink composition for use in an inkjet recording method,
   the aqueous ink composition comprising: an aqueous pigment dispersion having a hue angle $h^1$ in L*C*h color space determined using a spectrophotometer; and an aqueous dye composition having a hue angle $h^2$ in L*C*h color space determined using a spectrophotometer, wherein the hue angle $h^2$ of the aqueous dye composition satisfies the following conditions:

   when the hue angle $h^1$ is 0° or greater and smaller than 45°, the hue angle $h^2$ is in a range of $(h^1+45)$° or greater and $(360-45+h^1)$° or smaller,
   when the hue angle $h^1$ is 45° or greater and smaller than 315°, the hue angle $h^2$ is in a range of 0° or greater and $(h^1-45)$° or smaller or in a range of $(h^1+45)$° or greater and 360° or smaller,
   when the hue angle $h^1$ is 315° or greater and smaller than 360°, the hue angle $h^2$ is in a range of $(h^1+45-360)$° or greater and $(h^1-45)$° or smaller.

2. The aqueous ink composition according to claim 1, wherein the aqueous pigment dispersion is a dispersion in which a pigment is dispersed in an aqueous medium with a pigment dispersant, and the aqueous dye composition is a composition in which a dye is dissolved or dispersed in an aqueous medium.

3. The aqueous ink composition according to claim 1, wherein the dye has an amount of 0.05 to 1.5% by mass of a total amount of the aqueous ink composition.

4. The aqueous ink composition according to any one of claims 1 to 3, further comprising a polyether-modified siloxane.

5. The aqueous ink composition according to claim 4, further comprising an acetylene-based surfactant.

6. The aqueous ink composition according to claim 5, wherein a mass ratio between the acetylene-based surfactant and the polyether-modified siloxane [polyether-modified siloxane/acetylene-based surfactant] is in a range of 0.05 to 0.3.

7. The aqueous ink composition according to any one of claims 1 to 3, further comprising an acid-modified polypropylene resin.

8. The aqueous ink composition according to any one of claims 1 to 3, further comprising an oxidized polyethylene wax.

9. The aqueous ink composition according to claim 8, wherein the oxidized polyethylene wax has a melting point of 140°C or lower.

10. The aqueous ink composition according to any one of claims 1 to 3, wherein a combination of the aqueous pigment dispersion and the aqueous dye composition is a combination of an aqueous yellow pigment dispersion having a hue angle $h^1$ in a range of 45° to 135° in L*C*h color space and an aqueous red dye composition having a hue angle $h^2$ in a range of 0° to $(h^1-45)$° in L*C*h color space, or a combination of an aqueous yellow pigment dispersion having the hue angle $h^1$ in a range of 45° to 135° and an aqueous red dye composition having the hue angle $h^2$ in a range of $(h^2+45)$° to 360°.

11. The aqueous ink composition according to claim 10, wherein the pigment is C.I. Pigment Yellow 74, and the dye is Acid Red 151.

12. The aqueous ink composition according to claim 10 or 11, wherein a mass ratio of the dye to a mass of the pigment [(mass of dye/mass of pigment) $\times$ 100] is 1 to 40% by mass.

13. An ink set comprising at least a yellow ink comprising the aqueous ink composition according to claim 10, a magenta ink, a cyan ink, and a black ink.

14. Printed matter made by printing the ink set according to claim 13 on a surface of a recording medium.

15. A production method for printed matter, the method comprising ejecting and printing the aqueous ink composition according to any one of claims 1 to 12 on a recording medium by an inkjet recording method in which a distance from a surface (x) having ink ejection holes of an inkjet head to a position (y) where a normal to the surface (x) intersects the recording medium is 1 mm or more.

## INTERNATIONAL SEARCH REPORT

| International application No. |
| --- |
| **PCT/JP2022/045218** |

**A. CLASSIFICATION OF SUBJECT MATTER**

*B41M 1/30*(2006.01)i; *C09D 11/30*(2014.01)i; *C09D 11/40*(2014.01)i; *B41M 5/00*(2006.01)i; *B41J 2/01*(2006.01)i
FI:  C09D11/30; C09D11/40; B41M1/30 D; B41M5/00 100; B41M5/00 120; B41J2/01 501

According to International Patent Classification (IPC) or to both national classification and IPC

**B. FIELDS SEARCHED**

Minimum documentation searched (classification system followed by classification symbols)

B41M1/30; C09D11/30; C09D11/40; B41M5/00; B41J2/01

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/106586 A1 (DAINIPPON INK & CHEMICALS) 03 June 2021 (2021-06-03) claims 1-6, 10, 17, paragraphs [0088], table 2, examples 8-10 | 1-9 |
| Y | | 4-9, 11, 15 |
| X | JP 8-239610 A (MIKUNI SHIKISO KK) 17 September 1996 (1996-09-17) claims 1-8, paragraphs [0008], [0015], [0049]-[0052], examples 5, 7 | 1-3, 10, 12-14 |
| Y | | 4-9, 11, 15 |
| X | JP 2019-123840 A (SCREEN HOLDINGS CO LTD) 25 July 2019 (2019-07-25) claims 1-4, 6, paragraphs [0005]-[0016], examples 1-6 | 1-3, 10, 12, 14 |
| Y | | 4-9, 15 |
| X | JP 2006-328140 A (BROTHER IND LTD) 07 December 2006 (2006-12-07) paragraph [0068], table 1 (MV-P, CG-P) | 1-3 |
| Y | | 4-9 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 February 2023** | **07 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/045218**

**C.     DOCUMENTS CONSIDERED TO BE RELEVANT**

| Category* | Citation of document, with indication, where appropriate, of the relevant passages | Relevant to claim No. |
|---|---|---|
| X | JP 2016-17135 A (CLARIANT INT LTD) 01 February 2016 (2016-02-01)<br>        claim 1, examples 1-6 | 1, 2 |
| Y | | 4-9 |
| X | JP 2001-192589 A (RICOH CO LTD) 17 July 2001 (2001-07-17)<br>        claim 1, paragraph [0010], examples 1-6 | 1, 2 |
| Y | | 4-9 |
| X | JP 58-11568 A (MITSUI TOATSU CHEMICALS) 22 January 1983 (1983-01-22)<br>        claims, p. 2, upper left column, line 3 from the bottom to upper right column, line 9,<br>        examples 2, 3 | 1-3 |
| Y | | 4-9 |

**INTERNATIONAL SEARCH REPORT**
Information on patent family members

International application No.

**PCT/JP2022/045218**

| Patent document cited in search report | | | Publication date (day/month/year) | Patent family member(s) | | | Publication date (day/month/year) |
|---|---|---|---|---|---|---|---|
| WO | 2021/106586 | A1 | 03 June 2021 | EP | 4067085 | A1 | |
| | | | | claims 1-6, 10, 17, table 2, examples 8-10 | | | |
| | | | | CN | 114641543 | A | |
| JP | 8-239610 | A | 17 September 1996 | (Family: none) | | | |
| JP | 2019-123840 | A | 25 July 2019 | WO | 2019/142495 | A1 | |
| JP | 2006-328140 | A | 07 December 2006 | US | 2006/0268084 | A1 | |
| | | | | paragraphs [0106]-[0107], table 1 (MV-P, CG-P) | | | |
| JP | 2016-17135 | A | 01 February 2016 | US | 2017/0145236 | A1 | |
| | | | | claim 1, examples 1-6 | | | |
| | | | | WO | 2016/005196 | A1 | |
| | | | | EP | 3167010 | A1 | |
| | | | | CN | 106536636 | A | |
| JP | 2001-192589 | A | 17 July 2001 | (Family: none) | | | |
| JP | 58-11568 | A | 22 January 1983 | (Family: none) | | | |

Form PCT/ISA/210 (patent family annex) (January 2015)

**EP 4 403 369 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011012226 A

- WO 2018190139 A